# EUROPÄISCHE PATENTSCHRIFT

(11) **EP 2 470 404 B1**
(45) Veröffentlichungstag und Bekanntmachung des Hinweises auf die Patenterteilung: **29.05.2013**
(21) Anmeldenummer: 10798959.2
(22) Anmeldetag: 10.12.2010
(51) Int. Cl.: B60T 10/02, F16J 15/34

(54) **HYDRODYNAMISCHE MASCHINE, INSBESONDERE HYDRODYNAMISCHER RETARDER**
HYDRODYNAMIC MACHINE, IN PARTICULAR A HYDRODYNAMIC RETARDER
MACHINE HYDRODYNAMIQUE, EN PARTICULIER RALENTISSEUR HYDRODYNAMIQUE

(30) Priorität: 15.12.2009 DE 102009058341
(43) Veröffentlichungstag der Anmeldung: 04.07.2012
(73) Patentinhaber: Voith Patent GmbH, 89522 Heidenheim (DE)
(72) Erfinder: ADAMS, Werner, 74564 Crailsheim (DE); LAUKEMANN, Dieter, 74564 Crailsheim (DE); OHR, Thomas, 74564 Crailsheim (DE)
(74) Vertreter: Dr. Weitzel & Partner
(86) Internationale Anmeldenummer: PCT/EP2010/007525
(87) Internationale Veröffentlichungsnummer: WO 2011/082759

(56) Entgegenhaltungen:
- DE-B3-102006 054 615
- DE-U- 6 904 388
- FR-A- 1 372 211
- US-A- 3 659 860

## Beschreibung

Die vorliegende Erfindung betrifft eine hydrodynamische Maschine, insbesondere einen hydrodynamischen Retarder, im Einzelnen gemäß dem Oberbegriff von Anspruch 1.

Hydrodynamische Maschinen sind seit vielen Jahrzehnten bekannt. Sie weisen wenigstens zwei Schaufelräder auf, von denen wenigstens eines umläuft. Wenigstens ein zweites Schaufelrad bildet mit dem ersten Schaufelrad einen Arbeitsraum aus, der entweder permanent mit Arbeitsmedium befüllt oder wahlweise mit Arbeitsmedium befüllbar ist, um Drehmomente beziehungsweise Antriebsleistung hydrodynamisch vom ersten Schaufelrad auf das zweite Schaufelrad zu übertragen.

Wenn das zweite Schaufelrad stationär gehalten ist oder von außen entgegen der Drehrichtung des ersten Schaufelrads angetrieben wird, ist die hydrodynamische Maschine ein hydrodynamischer Retarder, dessen erstes Schaufelrad hydrodynamisch abgebremst wird. Wenn das zweite Schaufelrad hydrodynamisch über einen Kreislauf im Arbeitsraum vom ersten Schaufelrad angetrieben wird und somit in dieselbe Drehrichtung umläuft wie das erste Schaufelrad, spricht man von einer hydrodynamischen Kupplung. Wenn neben den umlaufenden Schaufelrädern weitere Leitschaufelräder beziehungsweise Leitschaufelkränze vorgesehen sind, ist die hydrodynamische Maschine ein hydrodynamischer Wandler.

Die vorliegende Erfindung ist grundsätzlich bei sämtlichen der zuvor genannten Bauformen von hydrodynamischen Maschinen anwendbar.

Als Arbeitsmedium für hydrodynamische Maschinen kommt insbesondere Öl, Wasser oder ein Wassergemisch in Betracht. Da die hydrodynamische Maschine umlaufende und nicht umlaufende (stationäre) Bauteile aufweist oder relativ zueinander mit verschiedener Drehzahl umlaufende Bauteile, sind Abdichtungen zwischen diesen Bauteilen notwendig, um einen unerwünschten Austritt von Arbeitsmedium in die Umgebung zu verhindern. In der Praxis hat sich herausgestellt, dass diese Abdichtungen mitunter problematisch sind und insbesondere nach einem längerem Gebrauch der hydrodynamischen Maschine zu Leckagen neigen. Dies trifft insbesondere bei dem Arbeitsmedium Wasser zu.

Obwohl in der Vergangenheit erhebliche Anstrengungen unternommen worden sind, um die Abdichtungen zu perfektionieren, hat es insbesondere bei einer als hydrodynamischer Retarder ausgeführten hydrodynamischer Maschine, dessen Arbeitsmedium Wasser beziehungsweise ein Wassergemisch, insbesondere das Kühlmittel eines Fahrzeugkühlkreislauf ist, immer noch Probleme mit der Dichtigkeit gegeben. Obwohl beim Arbeitsmedium Wasser ein Austritt von Wasser nicht schädlich für die Umwelt ist, bedeutet der unerwünschte Wasserverlust jedoch, dass das Kühlsystem häufig mit Wasser nachgefüllt werden muss, was für den Benutzer eines Kraftfahrzeuges mit einem solchen Kühlsystem mit hydrodynamischer Maschine, insbesondere mit hydrodynamischem Retarder, nicht zufriedenstellend ist.

Zum druckschriftlichen Stand der Technik, der sich mit Abdichtungen von hydrodynamischen Maschinen, insbesondere von hydrodynamischen Retardern, befasst, wird auf die folgenden Dokumente verwiesen:
DE 10 2005 009 456 A1
WO 2004/026652 A1
DE 102 42 736 A1
DE 10 2006 054 615 B3

Der vorliegenden Erfindung liegt die Aufgabe zugrunde, eine hydrodynamische Maschine insbesondere einen hydrodynamischen Retarder anzugeben, dessen Antriebswelle besonders zuverlässig und dauerhaft gegen das Gehäuse der hydrodynamischen Maschine abgedichtet ist, um einen unerwünschten Austritt von Arbeitsmedium aus der hydrodynamischen Maschine zu vermeiden. Unter Antriebswelle ist dabei jegliche Form einer Welle, gleich ob Hohlwelle oder Vollwelle oder scheiben- oder ringförmige Welle zu verstehen, die einen Antrieb wenigstens eines Schaufelrads der hydrodynamischen Maschine ermöglicht.

Die erfindungsgemäße Aufgabe wird durch eine hydrodynamische Maschine mit den Merkmalen des Anspruches 1 gelöst. In den abhängigen Ansprüchen sind vorteilhafte und besonders zweckmäßige Ausgestaltungen der Erfindung angegeben.

Die erfindungsgemäße hydrodynamische Maschine, die insbesondere als hydrodynamischer Retarder ausgeführt ist, weist wenigstens ein erstes umlaufendes Schaufelrad sowie ein zweites Schaufelrad auf, das ebenfalls umläuft oder stationär (nicht umlaufend) gehalten ist. Beide Schaufelräder bilden einen mit einem Arbeitsmedium wahlweise befüllbaren oder stets befüllten Arbeitsraum aus, der insbesondere eine Torusform aufweist, um Drehmoment hydrodynamisch vom ersten Schaufelrad auf das zweite Schaufelrad zu übertragen. Wenn das zweite Schaufelrad dabei stationär gehalten wird oder entgegen der Drehrichtung des ersten Schaufelrades angetrieben wird, arbeitet die hydrodynamische Maschine als Retarder beziehungsweise als Gegenlaufretarder. Wenn das zweite Schaufelrad drehbar gelagert ist, um hydrodynamisch über den Arbeitsmediumkreislauf im Arbeitsraum vom ersten Schaufelrad angetrieben zu werden, arbeitet die hydrodynamische Maschine als hydrodynamische Kupplung.

Die erfindungsgemäße hydrodynamische Maschine weist ferner wenigstens ein Gehäuse auf, das entweder zusammen mit einem der beiden Schaufelräder das andere Schaufelrad umschließt, wodurch das Gehäuse demnach zumindest teilweise auch durch eines der beiden Schaufelräder, nämlich das "äußere" Schaufelrad gebildet wird, oder welches beide Schaufelräder umschließt. Wenn das Gehäuse beide Schaufelräder umschließt, kann dieses insbesondere stationär gehalten sein. Ebenso, wenn das Gehäuse zusammen mit einem Stator, der durch eines der beiden Schaufelräder gebildet wird, das andere Schaufelrad umschließt. Es ist wenigstens eine Antriebswelle vorgesehen, um das erste oder das zweite Schaufelrad mechanisch anzutreiben, wobei die Antriebswelle mittels einer Gleitringdichtung gegen das Gehäuse abgedichtet ist, um einen Austritt von Arbeitsmedium zwischen der Antriebswelle und dem Gehäuse zu verhindern. Die Gleitringdichtung weist wenigstens eine Sperrflüssigkeitszufuhr auf, um eine Sperrflüssigkeit der Gleitringdichtung zuzuführen und mittels dieser Sperrflüssigkeit die Gleitringdichtung zu kühlen und/oder zu schmieren.

Erfindungsgemäß weist die Gleitringdichtung wenigstens einen ersten Gleitring und einen zweiten Gleitring auf, die in Radialrichtung konzentrisch umschließend angeordnet sind und jeweils eine Dichtfläche aufweisen, die einen in Radialrichtung zu der Antriebswelle verlaufenden Dichtspalt zusammen mit einem Gegenelement abdichten. Insbesondere ist die zweite Gleitringdichtung auf einem größeren Durchmesser angeordnet als die erste Gleitringdichtung und umschließt diese auf ihrer Außenseite vorteilhaft vollständig. Dabei können die Gleitringdichtungen auf demselben axialen Abschnitt positioniert sein, sodass insbesondere deren Dichtflächen miteinander fluchten. Dies wird nachfolgend noch anhand der Figuren dargestellt.

In Radialrichtung zwischen den beiden Dichtflächen mündet in der Gleitringdichtung ein Sperrflüssigkeitskanal, um die beiden Dichtflächen mit Sperrflüssigkeit zu kühlen und/oder zu schmieren. Der Sperrflüssigkeitskanal wird mit Sperrflüssigkeit aus der Sperrflüssigkeitszufuhr beschickt, sodass die Sperrflüssigkeit durch diesen Sperrflüssigkeitskanal hindurchströmen kann, und über die Mündung des Sperrflüssigkeitskanals zu den beiden Dichtflächen gelangen kann. Vorteilhaft ist ferner eine Sperrflüssigkeitsabfuhr vorgesehen, in welche die Sperrflüssigkeit, nachdem sie die beiden Dichtflächen gekühlt und/oder geschmiert hat, einströmt und dann über die Sperrflüssigkeitsabfuhr aus der Gleitringdichtung und insbesondere aus der hydrodynamischen Maschine abgeleitet wird.

Gemäß einer ersten Ausführungsform sind der erste Gleitring und der zweite Gleitring einteilig oder mechanisch miteinander verbunden ausgeführt. Gemäß einer alternativen Ausführungsform sind der erste Gleitring und der zweite Gleitring als voneinander getrennte Bauteile ausgeführt, welche somit nicht mechanisch miteinander verbunden sind.

Vorteilhaft laufen entweder die beiden Gleitringe, insbesondere gemeinsam mit derselben Drehzahl, mit der Antriebswelle und/oder einem Schaufelrad um, und das Gegenelement ist stationär. Alternativ läuft das Gegenelement mit der Antriebswelle und/oder einem Schaufelrad insbesondere mit derselben Drehzahl um, und die beiden Gleitringe sind stationär gehalten.

Bevorzugt dichten die beiden Dichtflächen den Dichtspalt zusammen mit einem gemeinsamen einteiligen Gegenelement, das insbesondere als Gegenring ausgeführt ist, ab.

Erfindungsgemäß ist wenigstens in der Mündung des Sperrflüssigkeitskanals in der Gleitringdichtung ein zumindest teilweise in Axialrichtung verlaufendes Leitelement, insbesondere in Form eines Einsatzes, vorgesehen, welcher die aus dem Sperrflüssigkeitskanal austretende Sperrflüssigkeit in Richtung wenigstens der radial inneren Dichtfläche oder in Richtung beider Dichtflächen leitet. Das Leitelement ist dabei vorteilhaft als ein, insbesondere in einem Axialschnitt durch die hydrodynamische Maschine L-förmiger Einsatz ausgeführt, welcher in Radialrichtung zwischen dem ersten Gleitring und dem zweiten Gleitring angeordnet ist.

Der Einsatz trennt vorteilhaft die Sperrflüssigkeitszufuhr derart von einer Sperrflüssigkeitsabfuhr der Gleitringdichtung ab, und ist hierfür vorteilhaft innerhalb des Sperrflüssigkeitskanals verlaufend angeordnet, dass die Sperrflüssigkeit aus der Sperrflüssigkeitszufuhr entlang des Einsatzes, insbesondere in Axialrichtung, in den Bereich der ersten radial inneren Dichtfläche, dann um den Einsatz herum radial nach außen in den Bereich der zweiten radial äußeren Dichtfläche und anschließend, insbesondere wieder in Axialrichtung, in die Sperrflüssigkeitsabfuhr strömt. Besonders vorteilhaft strömt bei dieser Strömungsführung die Sperrflüssigkeit aus der Sperrflüssigkeitszufuhr zunächst in eine erste axiale Richtung entlang des Einsatzes und dann, nachdem sie die Dichtflächen gekühlt und/oder geschmiert hat, entlang einer zweiten entgegengesetzten Axialrichtung in Richtung der Sperrflüssigkeitsabfuhr.

Die Sperrflüssigkeitszufuhr und die Sperrflüssigkeitsabfuhr können jeweils als zumindest teilweise in Radialrichtung verlaufender Kanal ausgeführt sein, wobei die beiden Kanäle in Umfangsrichtung versetzt zueinander, insbesondere um im Wesentlichen oder genau 180° versetzt, angeordnet sein können.

Gemäß der Erfindung weist die Gleitringdichtung ein Gehäuse auf, welches die beiden Gleitringe und insbesondere das Gegenelement umschließt. In dem Gehäuse kann dann auch eine Bohrung als Sperrflüssigkeitszufuhr und eine weitere Bohrung als Sperrflüssigkeitsabfuhr vorgesehen sein, wobei sich an die Bohrungen entsprechende Kanäle im Gehäuse und/oder in einem Schaufelrad der hydrodynamischen Maschine anschließen können.

Besonders günstig ist in das Gehäuse eine Feder, beispielsweise Wellenfeder oder Sinusfeder eingesetzt, welche die beiden Gleitringe in Richtung der Dichtflächen mit Federkraft beaufschlagt, um die Gleitringe mit ihren Dichtflächen gegen das Gegenelement zu drücken. Hierzu ist die Feder zwischen einer entsprechenden Gehäusewand und den beiden Gleitringen eingesetzt, wobei einer der beiden Gleitringe, insbesondere der radial äußere Gleitring, über den Einsatz von der Feder druckbeaufschlagt wird. Hierzu kann der Einsatz frei an dem Dichtring, insbesondere in Axialrichtung, anliegen. Pro Gleitring kann eine separate Feder vorgesehen sein. Alternativ beaufschlagt eine, insbesondere eine einzige Feder mehrere beziehungsweise alle Gleitringe.

Die Erfindung soll nachfolgend anhand eines Ausführungsbeispiels exemplarisch beschrieben werden.
- Figur 1: zeigt eine hydrodynamische Maschine in Form eines hydrodynamischen Retarders mit Abdichtungen der Antriebswelle gegen das Gehäuse, die erfindungsgemäß ausgeführt sein können.
- Figur 2: zeigt einen Ausschnitt aus einem hydrodynamischen Retarder im Axialschnitt mit einer erfindungsgemäß ausgeführten Abdichtung der Antriebswelle gegen das Gehäuse in einem ersten Abschnitt durch die hydrodynamischen Maschine auf einer Seite der Antriebswelle.
- Figur 3: zeigt einen Axialschnitt entsprechend der Figur 2 auf der anderen Seite der Antriebswelle, beispielsweise in einem Axialschnitt durch einen um 180° gegenüber dem Bereich aus der Figur 2 versetzten Bereich der erfindungsgemäßen Abdichtung.

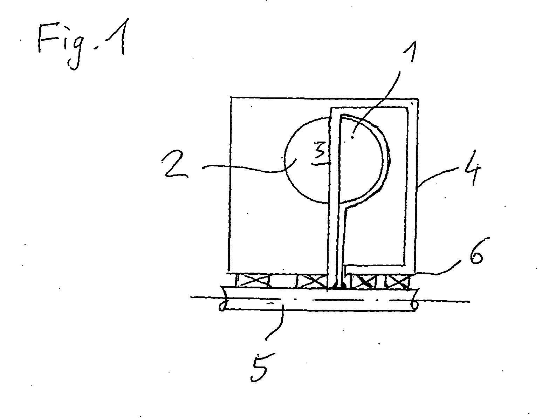

In der Figur 1 ist schematisch ein hydrodynamischer Retarder dargestellt, wobei schematisch ein Schnitt nur durch eine Seite der Antriebswelle 5 gezeigt ist. Die andere Seite ist entsprechend spiegelbildlich ausgeführt (nicht dargestellt).

Man erkennt ein erstes umlaufendes Schaufelrad 1 und ein zweites stationäres Schaufelrad 2. Beide Schaufelräder 1, 2 bilden miteinander einen torusförmigen Arbeitsraum 3, in welchen wahlweise ein Arbeitsmedium, beispielsweise Öl, Wasser oder ein Wassergemisch einbringbar ist, um Antriebsleistung, hier Bremsmoment, hydrodynamisch vom ersten Schaufelrad 1 auf das zweite Schaufelrad 2 den Stator zu übertragen.

Das zweite Schaufelrad 2 bildet zusammen mit einer das erste Schaufelrad 1 auf der dem zweiten Schaufelrad 2 abgewandten Seite umschließenden Schale ein Gehäuse 4 aus.

Das erste Schaufelrad 1 wird über die Antriebswelle 5 angetrieben. Die Antriebswelle 5 ist mittels einer Anzahl von Dichtungen gegen das Gehäuse 4 abgedichtet. Beispielsweise die ganz rechts in der Figur 1 gezeigte Dichtung kann als erfindungsgemäß ausgeführte Gleitringdichtung 6 vorgesehen sein. Selbstverständlich ist es nicht notwendig, die in der Figur 1 dargestellte Anzahl von Dichtungen vorzusehen. Ferner könnte zusätzlich oder alternativ auch eine der anderen exemplarisch dargestellten Dichtungen als erfindungsgemäße Gleitringdichtung ausgeführt sein.

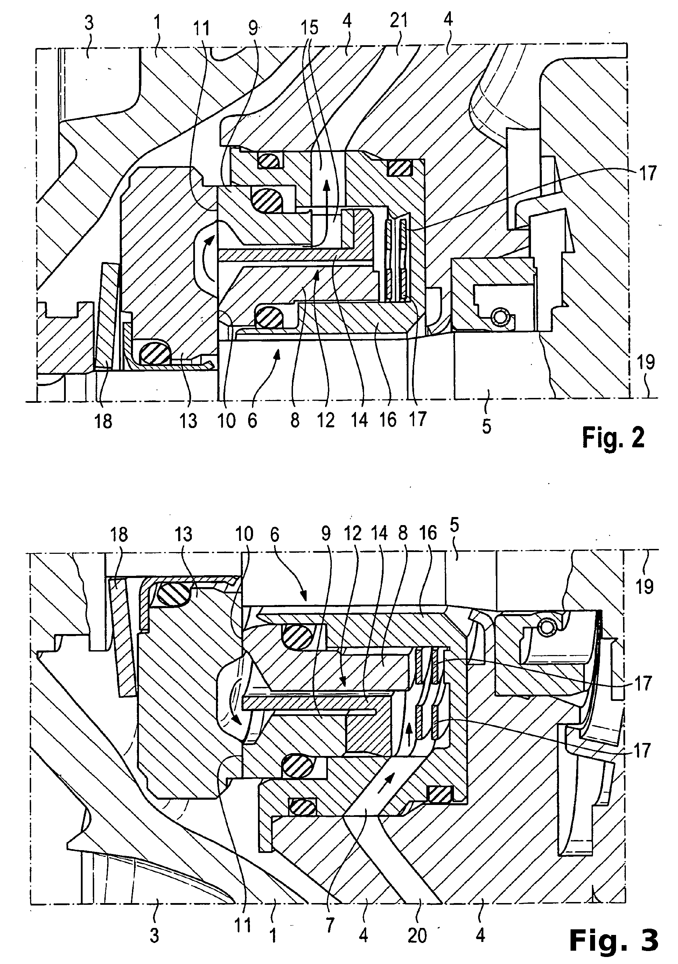

In der Figur 2 ist nun ein Axialschnitt durch eine entsprechende Gleitringdichtung 6 gezeigt. Man erkennt ferner den radial inneren Bereich des ersten Schaufelrades 1 sowie die Antriebswelle 5 und einen radial inneren Teil des Gehäuses 4. Auch ein radial innerer Teil des Arbeitsraumes 3 ist noch zu erkennen.

In der Figur 3 ist ein entsprechender Schnitt, jedoch in einer in Umfangsrichtung des hydrodynamischen Retarders versetzten Schnittebene dargestellt. Sich entsprechende Elemente sind mit denselben Bezugszeichen beziffert.

Die Funktion der Gleitringdichtung 6, die in den Figuren 2 und 3 dargestellt ist, soll nun nachfolgend näher erläutert werden:
Die Gleitringdichtung 6 weist einen ersten Gleitring 8 und einen zweiten Gleitring 9 auf. Die Gleitringe 8, 9 dichten den in Radialrichtung zur Antriebswelle 5 verlaufenden Dichtspalt zusammen mit einem gemeinsamen Gegenelement in Form eines Gegenrings 13 ab, der erste Gleitring 8 mit seiner (ersten) Dichtfläche 10 und der zweite Gleitring 9 mit seiner (zweiten) Dichtfläche 11.

Die Gleitringdichtung 6 weist ein Gehäuse 16 auf, welches die beiden Gleitringe 8, 9 umschließt und führt. Zwischen einer Stirnwand des Gehäuses 16 und den beiden Gleitringen 8, 9 sind zwei Federn 17, hier in Form je einer Sinusfeder oder Wellenfeder angeordnet, welche sich gegen das Gehäuse 16 abstützen und die Gleitringe 8, 9 mit deren Dichtflächen 10, 11 gegen den Gegenring 13 drücken, um eine möglichst dichte Abdichtung des Dichtspalts zu erreichen. Die beiden Federn 17 umschließen einander konzentrisch. Alternativ könnte auch eine gemeinsame Feder vorgesehen sein, welche beide Gleitringe 8, 9 beaufschlagt.

In dem gezeigten Ausführungsbeispiel wird der Gegenring 13 ebenfalls durch eine Feder, hier mit 18 bezeichnet, in Richtung der Gleitringe 8, 9 druckbeaufschlagt. Selbstverständlich wäre es auch möglich, andere Druckelemente oder allgemein Kraftspeicher zum Aneinanderdrücken der Gleitringe 8, 9 und des Gegenelementes, hier des Gegenringes 13, zu erreichen. Schließlich wäre es auch möglich, ohne Kraftspeicher und nur durch Formschluss ein entsprechendes Aneinanderdrücken zu erreichen.

Bei der hier dargestellten Ausführungsform ist das Gehäuse 16 zusammen mit den beiden Gleitringen 8, 9 in das Gehäuse 4 des hydrodynamischen Retarders eingesetzt und läuft daher nicht um. Hingegen ist der Gegenring 13 in die Antriebswelle 5 eingesetzt und läuft daher zusammen mit der Antriebswelle 5 beziehungsweise dem ersten Schaufelrad 1 um.

Zwischen den ersten, radial inneren Gleitring 8 und den zweiten radial äußeren Gleitring 9 ist ein Einsatz 14 eingebracht, der, wie nachfolgend noch erläutert wird, eine Strömungsführungsfunktion für die in die Gleitringdichtung 6 eingeleitete und zum Dichtspalt geförderte Sperrflüssigkeit hat. Vorliegend weist der Einsatz 14 eine L-Form in dem gezeigten Schnitt auf, wobei der vergleichsweise längere Schenkel parallel zur Drehachse 19 der Antriebswelle 5 verläuft und der vergleichsweise kürzere Schenkel senkrecht hierzu. Dabei ist der vergleichweise kürzere Schenkel derart zwischen den zweiten Gleitring 9 und die radial äußere Feder 17 eingebracht, dass die Feder 17 ihre Druckkraft über den Einsatz 14 auf den zweiten Gleitring 9 ausübt, wohingegen in der gezeigten Ausführungsform die radial innere Feder 17 ihre Druckkraft auf den ersten Gleitring 8 ohne Zwischenschaltung eines weiteren Elementes unmittelbar ausübt.

Die Sperrflüssigkeit wird über einen Zufuhrkanal 20 im Gehäuse 4 des hydrodynamischen Retarders zu einer Sperrflüssigkeitszufuhr 7 der Gleitringdichtung 6 geleitet. Die Sperrflüssigkeitszufuhr 7 kann beispielsweise in Form einer oder mehrerer Bohrungen im Gehäuse 16 der Gleitringdichtung 6 ausgeführt sein, wobei die wenigstens eine Bohrung vorzugsweise zumindest teilweise in Radialrichtung verläuft.

Von der Sperrflüssigkeitszufuhr 7 gelangt die Sperrflüssigkeit, wie durch die Pfeile angedeutet ist, in den radial innenliegenden Spalt zwischen dem Einsatz 14 und dem ersten Gleitring 8, strömt in diesem Spalt in Axialrichtung entlang des vergleichsweise längeren Schenkels des Einsatzes 14 bis zu dem freien Schenkelende des Einsatzes 14, das nahe den Dichtflächen 10, 11 positioniert ist. Dort strömt die Sperrflüssigkeit radial nach außen um das freie Ende des Einsatzes 14 herum in den radial äußeren Spalt zwischen dem Einsatz 14 und dem zweiten, radial äußeren Gleitring 9. Aufgrund dieser Umströmung wird die Sperrflüssigkeit gezwungen, dicht an die Dichtflächen 10, 11 heranzuströmen, um diese zu schmieren und/oder zu kühlen. Die dabei aufgenommene Wärme wird von der wieder abströmenden Sperrflüssigkeit abgeführt, wobei die Sperrflüssigkeit wiederum in Axialrichtung, diesmal entgegengesetzt zu dem "Hinweg" durch den Spalt zwischen dem Einsatz 14 und zweiten Gleitring 9 bis zur Sperrflüssigkeitsabfuhr 15 der Geleitringdichtung 6 strömt. Die Sperrflüssigkeitsabfuhr 15 ist wiederum in Form einer oder mehrer Bohrungen im Gehäuse 16 der Gleitringdichtung 6 ausgeführt, wobei vorliegend hierzu fluchtende Bohrungen zum Ausbilden der Sperrflüssigkeitsabfuhr 15 auch in dem zweiten Gleitring 9 vorgesehen sind.

Von der Sperrflüssigkeitsabfuhr 15 in der Gleitringdichtung 6 strömt die Sperrflüssigkeit dann durch einen Abfuhrkanal 21 oder eine Vielzahl hiervon in dem Gehäuse 4 des hydrodynamischen Retarders.

Die gezeigte Ausgestaltung der Gleitringdichtung 6 ermöglicht eine äußerst effiziente Kühlung der beiden Dichtflächen 10, 11 bei gleichzeitig optimaler Abdichtung der Antriebswelle 5 gegenüber dem Gehäuse 4 des hydrodynamischen Retaders. Durch die gewählte in Radialrichtung verschachtelte Anordnung kann zudem eine überaus kurze axiale Baulänge und eine sehr kompakte Ausführungsform der Gleitringdichtung 6 mit einer gleichmäßigen Kraftbeaufschlagung beider Gleitringe 8, 9 erreicht werden. Ferner ist die Bauteilanzahl der Gleitringdichtung 6 minimiert.

Die Sperrflüssigkeitszufuhr 7 beziehungsweise der Zufuhrkanal 20 kann beispielsweise mit der Arbeitsmediumzufuhr der hydrodynamischen Maschine, hier des hydrodynamischen Retarders verbunden werden, um einen möglichst hohen Druck zu erreichen. Als Arbeitsmedium kommt insbesondere Wasser in Betracht. Die Sperrflüssigkeitsabfuhr 15 beziehungsweise der Abfuhrkanal 21 kann beispielsweise mit der Saugseite einer Pumpe (nicht dargestellt) verbunden werden, mittels welcher das Arbeitsmedium durch den Arbeitsraum 3 beziehungsweise bis in den Retardereintritt gepumpt wird. Bei einer Einbindung der hydrodynamischen Maschine, hier des hydrodynamischen Retarders in den Kühlkreislauf eines Kraftfahrzeugs wird die Pumpe in aller Regel die Kühlmittelpumpe sein.

## Patentansprüche

1. Hydrodynamische Maschine, insbesondere hydrodynamischer Retarder,
1.1 mit einem ersten umlaufenden Schaufelrad (1);
1.2 mit einem zweiten ebenfalls umlaufenden oder stationären Schaufelrad (2);
1.3 beide Schaufelrader (1, 2) bilden einen mit einem Arbeitsmedium befüllbaren oder befüllten Arbeitsraum (3), um Drehmoment hydrodynamisch vom ersten Schaufelrad (1) auf das zweite Schaufelrad (2) zu übertragen;
1.4 mit einem Gehäuse (4), das zusammen mit einem der beiden Schaufelräder (2) das andere Schaufelrad (1) umschließt oder das beide Schaufelräder (1, 2) umschließt;
1.5 mit einer Antriebswelle (5), um das erste oder das zweite Schaufelrad (1,2) mechanisch anzutreiben; wobei
1.6 die Antriebswelle (5) mittels einer Gleitringdichtung (6) gegen das Gehäuse (4) abgedichtet ist, um einen Austritt von Arbeitsmedium zwischen der Antriebswelle (5) und dem Gehäuse (4) zu verhindern;
1.7 die Gleitringdichtung (6) weist eine Sperrflüssigkeitszufuhr (7) auf, um die Gleitringdichtung (6) zu kühlen und/oder zu schmieren; **gekennzeichnet durch** die folgenden Merkmale:
1.8 die Gleitringdichtung (6) weist einen ersten Gleitring (8) und einen zweiten Gleitringe (9) auf, die sich in Radialrichtung konzentrisch umschließend angeordnet sind und jeweils eine Dichtfläche (10,11) aufweisen, die einen in Radialrichtung zu der Antriebswelle (5) verlaufenden Dichtspalt zusammen mit einem Gegenetement (13) abdichten;
1.9 in Radialrichtung zwischen den beiden Dichtflächen (10,11) mündet in der Gleitringdichtung (6) ein Sperrflüssigkeitskanal (12), um die belden Dichtflächen (10, 11) mit Sperrflüssigkeit zu kühlen und/oder zu schmieren, wobei zumindest in der Mündung des Sperrflüssigkeitskanals (12) ein zumindest teilweise in Axialrichtung verlaufendes Leitelement in Form eines Einsatzes (14) vorgesehen ist, welcher die aus dem Sperrflüssigkeitskanal (12) austretende Sperrflüssigkeit in Richtung wenigstens der radial inneren Dichtfläche (10) oder in Richtung beider Dichtflächen (10, 11) leitet, und die Gleitringdichtung (6) ein Gehäuse (16) aufweist, welches die beiden Gleitringe (8, 9) umschließt, wobei zwischen dem Gehäuse (16) und den beiden Gleitringen (8, 9) wenigstes eine die beiden Gleitringe (8, 9) in Richtung der Dichtflächen (10, 11) kraftbeaufschlagende Feder (17) vorgesehen ist, und die Feder (17) wenigstens einen der beiden Gleitringe (8, 9) über den Einsatz (14) kraftbeaufschlagt.

2. Hydrodynamische Maschine gemäß Anspruch 1, **dadurch gekennzeichnet, dass** der erste Gleitring (8) und der zweite Gleitring (9) als voneinander getrennte Bauteile ausgeführt sind.

3. Hydrodynamische Maschine gemäß einem der Ansprüche 1 oder 2, **dadurch gekennzeichnet, dass** entweder die beiden Gleitringe (8, 9) mit der Antriebswelle (5) und/oder einem Schaufelrad (1, 2) umlaufen und das Gegenelement stationär ist, oder dass das Gegenelement mit der Antriebswelle (5) und/oder einem Schaufelrad (1, 2) umläuft und die beiden Gleitringe (8, 9) stationär sind.

4. Hydrodynamische Maschine gemäß einem der Ansprüche 1 bis 3, **dadurch gekennzeichnet, dass** die beiden Dichtflächen (10, 11) den Dichtspalt zusammen mit einem gemeinsamen einteiligen Gegenelement, das insbesondere als Gegenring (13) ausgeführt ist, abdichten.

5. Hydrodynamische Maschine gemäß einem der Ansprüche 1 bis 4, **dadurch gekennzeichnet, dass** die Feder (17) den radial äußeren ölleitring (9) über den Einsatz (14) krallbeaufsdlayt.

6. Hydrodynamische Maschine gemäß Anspruch 2 und Anspruch 5 und insbesondere gemäß einem der Ansprüche 3 oder 4, **dadurch gekennzeichnet, dass** das Leitelement als ein insbesondere in einem Axialschnitt durch dich die hydrodynamische Maschine L- förmiger Einsatz (14) ausgeführt ist, welcher in Radialrichtung zwischen dem ersten Gleitring (8) und dem zweiten Gleitring (9) angeordnet ist.

7. Hydrodynamische Maschine gemäß Anspruch 5 oder 6, **dadurch gekennzeichnet, dass** der Einsatz (14) die Sperrflüssigkeitszufuhr (7) derart von einer Sperrflüssigkeitsabfuhr (15) der Gleitringdichtung (6) abtrennt, Einsatzes (14), insbesondere in Axialrichtung, in den Bereich der ersten radial inneren Dichtfläche (10), dann um den Einsatz (14) herum radial nach außen in den Bereich der zweiten radial äußeren Dichtfläche (11) und anschließend, insbesondere wieder in Axialrichtung, in die Sperrflüssigkeitsabfuhr (15) strömt.
Hydrodynamische Maschine gemäß einem der Ansprüche 1 bis 7, **dadurch gekennzeichnet, dass** das Gehäuse (16) auch das Gegenelement umschließt.
Hydrodynamische Maschine gemäß Anspruch 8, **dadurch gekennzeichnet, dass die Feder (17) als Sinnsfeder ausgeführt ist.**

## Claims

1. A hydrodynamic machine, in particular a hydrodynamic retarder,
1.1 having a first revolving blade wheel (1);
1.2 having a second blade wheel (2), likewise revolving or stationary;
1.3 both blade wheels (1, 2) form a working chamber (3) which can be filled or is filled with a working medium, in order to transmit a torque hydrodynamically from the first blade wheel (1) to the second blade wheel (2);
1.4 having a casing (4), which together with one of the two blade wheels (2) encloses the other blade wheel (1) or which encloses both blade wheels (1, 2);
1.5 having a drive shaft (5), to drive the first or the second blade wheel (1, 2) mechanically; wherein
1.6 the drive shaft (5) is sealed off with respect to the casing (4) by means of a sliding ring seal (6), in order to prevent any escape of working medium between the drive shaft (5) and the casing (4);
1.7 the sliding ring seal (6) has a sealing liquid supply (7), for cooling down and/or lubricating the sliding ring seal (6);
**characterised by** the following features:
1.8 the sliding ring seal (6) has a first sliding ring (8) and a second sliding ring (9), which are arranged to enclose one another concentrically in radial direction and each exhibit a sealing surface (10,11), which together with a mating element (13) seal off a sealing gap running in radial direction with respect to the drive shaft (5);
1.9 a sealing liquid channel (12) opens into the sliding ring seal in radial direction between both sealing surfaces (10, 11), for cooling down and/or lubricating both sealing surfaces (10, 11) with sealing liquid, wherein at least in the mouth of the sealing liquid channel (12) a guiding element in the form of an insert (14), running at least partially in axial direction, is provided, which guides the sealing liquid coming out of the sealing liquid channel (12) in the direction at least of the radially internal sealing surface (10) or in the direction of both sealing surfaces (10, 11), and the sliding ring seal (6) has a casing (16) which encloses both sliding rings (8, 9), wherein at least one spring (17) imparting a force upon both sliding rings (8, 9) is arranged in direction of the sealing surfaces (10, 11) between the casing (16) and both sliding rings (8, 9) and the spring (17) imparts a force upon at least one of both sliding rings (8, 9) via the insert (14).

2. The hydrodynamic machine according to claim 1, **characterised in that** the first sliding ring (8) and the second sliding ring (9) are designed as components separated from one another.

3. The hydrodynamic machine according to one of claims 1 or 2, **characterised in that** either both sliding rings (8, 9) revolve with the drive shaft (5) and/or a blade wheel (1, 2) and the mating element is stationary, or that the mating element revolves with the drive shaft (5) and/or a blade wheel (1, 2) and both sliding rings (8, 9) are stationary.

4. The hydrodynamic machine according to one of claims 1 to 3, **characterised in that** both sealing surfaces (10, 11) seal off the sealing gap together with a common one-piece mating element, which is designed in particular as a mating ring (13).

5. The hydrodynamic machine according to one of claims 1 to 4, **characterised in that** the spring (17) imparts a force upon the radially external sliding ring (9) via the insert (14).

6. The hydrodynamic machine according to claim 2 and claim 5 and in particular according to one of claims 3 or 4, **characterised in that** the guiding element is designed as a L-shaped insert (14) in particular in an axial section through the hydrodynamic machine, which is provided in radial direction between the first sliding ring (8) and the second sliding ring (9).

7. The hydrodynamic machine according to claim 5 or 6, **characterised in that** the insert (14) separates the sealing liquid supply (7) from a sealing liquid discharge (15) of the sliding ring seal (6) in such a way that the sealing liquid flows from the sealing liquid supply (7) along the insert (14), in particular in axial direction, into the area of the first radially internal sealing surface (10), then radially around the insert (14) and outwardly into the area of the second radially external sealing surface (11) and subsequently in particular again in axial direction, into the sealing liquid discharge (15).

8. The hydrodynamic machine according to one of claims 1 to 7, **characterised in that** the casing (16) also encloses the mating element.

9. The hydrodynamic machine according to claim 8, **characterised in that** the spring (17) is designed as a sine spring.

## Revendications

1. Machine hydrodynamique, en particulier retardateur hydrodynamique,
1.1 présentant une première roue à aubes rotative (1);
1.2 présentant une seconde roue à aubes (2), également rotative ou stationnaire;
1.3 les deux roues à aubes (1, 2) forment une chambre de travail (3) qui peut être remplie ou est remplie d'un fluide de travail, pour transmettre un couple hydrodynamiquement de la première roue à aubes (1) à la seconde roue à aubes (2);
1.4 présentant un carter (4), qui avec l'une des deux roues à aubes (2) enveloppe l'autre roue à aubes (1) ou qui enveloppe les deux roues à aubes (1, 2);
1.5 présentant un arbre d'entraînement (5), pour entraîner la première ou la seconde roue à aubes (1, 2) mécaniquement; dans laquelle
1.6 l'arbre d'entraînement (5) est scellé hermétiquement par rapport au carter (4) au moyen d'une bague d'étanchéité coulissante (6), pour interdire tout échappement de fluide de travail entre l'arbre d'entraînement (5) et le carter (4);
1.7 la bague d'étanchéité coulissante (6) possède une arrivée de liquide d'étanchéité (7), pour refroidir et/ou lubrifier la bague d'étanchéité coulissante (6);
**caractérisée par** les propriétés suivantes:
1.8 la bague d'étanchéité coulissante (6) possède une première bague coulissante (8) et une seconde bague coulissante (9), qui sont disposées pour s'envelopper de manière concentrique dans la direction radiale et chacune présente une surface d'étanchéité (10, 11), qui avec un élément de contrepartie (13) scelle hermétiquement un espace d'étanchéité s'étendant dans la direction radiale par rapport à l'arbre d'entraînement (5);
1.9 une conduite de liquide d'étanchéité (12) débouche dans la bague d'étanchéité coulissante dans la direction radiale séparant les deux surfaces d'étanchéité (10, 11), pour refroidir et/ou lubrifier les deux surfaces d'étanchéité (10, 11) avec du liquide d'étanchéité, dans laquelle au moins dans l'embouchure de la conduite de liquide d'étanchéité (12), est prévu un élément de guidage sous forme d'insert (14), s'étendant au moins partiellement dans la direction axiale, pour guider le liquide d'étanchéité sortant de la conduite de liquide d'étanchéité (12) dans la direction au moins de la surface d'étanchéité radialement interne (10) ou dans la direction des deux surfaces d'étanchéité (10, 11) et la bague d'étanchéité coulissante (6) possède un carter (16), qui enveloppe les deux bagues coulissantes (8, 9), dans laquelle au moins un ressort (17) imprimant une force aux deux bagues coulissantes (8, 9) dans la direction des surfaces d'étanchéité (10, 11) est disposé entre le carter (16) et les deux bagues coulissantes (8, 9) et le ressort (17) imprime une force au moins à l'une des deux bagues coulissantes (8, 9) par le biais de l'insert (14).

2. Machine hydrodynamique selon la revendication 1, **caractérisée en ce que** la première bague coulissante (8) et la seconde bague coulissante (9) sont conçues comme composants séparés l'un de l'autre.

3. Machine hydrodynamique selon l'une des revendications 1 ou 2, **caractérisée en ce que** soit les deux bagues coulissantes (8, 9) tournent avec l'arbre d'entraînement (5) et/ou une roue à aubes (1, 2) et l'élément de contrepartie est stationnaire, soit l'élément de contrepartie tourne avec l'arbre d'entraînement (5) et/ou une roue à aubes (1, 2) et les deux bagues coulissantes (8, 9) sont stationnaires.

4. Machine hydrodynamique selon l'une des revendications 1 à 3, **caractérisée en ce que** les deux surfaces d'étanchéité (10, 11) scellent hermétiquement l'espace d'étanchéité avec un élément de contrepartie monobloc commun, qui est conçu en particulier comme bague de contrepartie (13).

5. Machine hydrodynamique selon l'une des revendications 1 à 4, **caractérisée en ce que** le ressort (17) imprime une force à la bague coulissante radialement externe (9) par le biais de l'insert (14).

6. Machine hydrodynamique selon la revendication 2 et la revendication 5 et en particulier selon l'une des revendications 3 ou 4, **caractérisée en ce que** l'élément de guidage est conçu comme insert (14) en forme de L en particulier en coupe axiale à travers la machine hydrodynamique, qui est disposé dans la direction radiale entre la première bague coulissante (8) et la seconde bague coulissante (9).

7. Machine hydrodynamique selon l'une des revendications 5 ou 6, **caractérisée en ce que** l'insert (14) sépare l'arrivée de liquide d'étanchéité (7) d'une sortie de liquide d'étanchéité (15) de la bague d'étanchéité coulissante (6) de telle sorte que le liquide d'étanchéité s'écoule de l'arrivée de liquide d'étanchéité (7) le long de l'insert (14), en particulier dans la direction axiale, dans la zone de la première surface d'étanchéité radialement interne (10), puis contourne l'insert (14) radialement et vers l'extérieur dans la zone de la seconde surface d'étanchéité externe radialement (11) et revient en particulier dans la direction axiale, dans la sortie de liquide d'étanchéité (15).

8. Machine hydrodynamique selon l'une des revendications 1 à 7, **caractérisée en ce que** le carter (16) enveloppe également l'élément de contrepartie.

9. Machine hydrodynamique selon la revendication 8, **caractérisée en ce que** le ressort (17) est conçu comme ressort sinusoïdal.
